# EUROPÄISCHE PATENTSCHRIFT

(11) **EP 2 867 072 B1**
(45) Veröffentlichungstag und Bekanntmachung des Hinweises auf die Patenterteilung: **04.11.2015**
(21) Anmeldenummer: 13732871.2
(22) Anmeldetag: 20.06.2013
(51) Int. Cl.: B60R 22/18, B60R 22/26, B60N 2/60

(54) **FAHRZEUGSITZ MIT EINEM GURTSCHLOSS**
VEHICLE SEAT WITH A BELT BUCKLE
SIÈGE DE VÉHICULE COMPRENANT UNE BOUCLE

(30) Priorität: 28.06.2012 DE 102012013081
(43) Veröffentlichungstag der Anmeldung: 06.05.2015
(73) Patentinhaber: Johnson Controls GmbH, 51399 Burscheid (DE)
(72) Erfinder: ASHTEKAR, Bhagyesh, 42651 Goteborg (SE); LEWIS, Richard G., 439 37 Onsala (SE); SVENSSON, Lennart, 423 38 Torslanda (SE)
(74) Vertreter: Liedhegener, Ralf
(86) Internationale Anmeldenummer: PCT/EP2013/062911
(87) Internationale Veröffentlichungsnummer: WO 2014/001197

(56) Entgegenhaltungen:
- DE-A1- 4 037 574
- DE-A1- 10 253 176
- DE-B3-102004 043 132
- DE-B3-102005 047 272
- FR-A1- 2 885 851
- JP-A- 2000 272 473
- JP-A- 2003 205 822
- US-A- 5 248 356
- US-A1- 2013 093 233

## Beschreibung

Die Erfindung betrifft einen Fahrzeugsitz mit einem Gurtschloss mit den Merkmalen des Oberbegriffs des Anspruchs 1.

### Stand der Technik

Aus der DE 10 2005 047 272 B3 ist ein gattungsgemäßer Fahrzeugsitz, insbesondere ein Fondsitz für ein Kraftfahrzeug, bekannt. Der Fahrzeugsitz weist dabei eine Rückenlehne und ein Sitzteil auf. In einem in Fahrtrichtung hinteren Bereich des Sitzteils ist ein Gurtschloss vorgesehen, welches mittels eines Adapters an einer in Querrichtung verlaufenden Quertraverse der tragenden Struktur des Fahrzeugsitzes befestigt ist.

In einem späteren Montageschritt werden die Struktur der Rückenlehne und die Struktur des Sitzteils gepolstert. Dabei wird je ein Schaumteil auf die Struktur der Rückenlehne und auf die Struktur des Sitzteils aufgebracht und mit einem Bezug überzogen.

Das dem Sitzteil zugeordnete Schaumteil weist dabei eine Aussparung für das Gurtschloss auf. Diese Aussparung erstreckt sich in Vertikalrichtung durch das Schaumteil hindurch und weist in Fahrtrichtung und in Querrichtung annähernd die Abmessungen des Gurtschlosses auf. Die Aussparung befindet sich in einem in Fahrtrichtung hinteren Bereich des Schaumteils und ist von dem in Fahrtrichtung hinteren Ende des Schaumteils beabstandet.

Dadurch durchragt das Gurtschloss das dem Sitzteil zugeordnete Schaumteil in Vertikalrichtung und ist sichtbar sowie bedienbar. Gleichzeitig liegt das Gurtschloss rundum annähernd bündig an dem Schaumteil an, wodurch Spalten oder Ritzen zwischen dem Gurtschloss und dem Schaumteil innerhalb der Aussparung vermieden sind.

Das Schaumteil wird bei der Montage in Vertikalrichtung von oben nach unten auf der Struktur des Sitzteils positioniert, wobei das Gurtschloss durch die Aussparung geführt wird, und an der Struktur des Sitzteils befestigt. Anschließend wird das der Rückenlehne zugeordnete Schaumteil an der Struktur der Rückenlehne positioniert und befestigt.

In manchen Fällen, beispielsweise wenn das Schaumteil der Rückenlehne zuerst und das Schaumteil des Sitzteils danach montiert wird, ist eine Positionierung des Schaumteils des Sitzteils von oben nach unten nicht möglich, sondern besagtes Schaumteil muss in annähernd waagerechter Richtung entgegen der Fahrtrichtung auf der Struktur des Sitzteils positioniert werden. Ein Durchführen des Gurtschlosses durch die beschriebene Aussparung ist bei dieser Bewegungsrichtung des Schaumteils nicht möglich.

Denkbar wäre, die Aussparung nach hinten bis zum hinteren Ende des Schaumteils zu vergrößern. Die Montage des Schaumteils wäre dann in der beschriebenen Bewegungsrichtung möglich. Das Schaumteil könnte entgegen der Fahrrichtung eingeschoben werden, wobei die Aussparung das Gurtschloss aufnehmen würde. Das Gurtschloss würde dann in Querrichtung rechts und links sowie in Fahrtrichtung vorne an dem Schaumteil anliegen. In Fahrtrichtung hinten würde jedoch zwischen dem Gurtschloss und dem hinteren Ende des Schaumteils eine ungewünschte Öffnung in Form eines Spalts verbleiben.

Auch aus der DE 103 34 977 A1 ist ein gattungsgemäßer Fahrzeugsitz bekannt, welcher ein Sitzteil mit einem Sitzkissen aufweist, welches eine Aussparung zur Aufnahme eines Gurtschlosses aufweist.

Aus der FR 2 885 851 A ist ein Fahrzeugsitz dieser Art ebenfalls bekannt, bei dessen Sitzkissen die mindestens eine Aussparung in Vertikalrichtung nach oben teilweise von einer Brücke begrenzt ist, wobei das Material der Brücke ein elastisches Material ist.

Aus der DE 10 2004 043 132 B3 ist weiterhin ein Fahrzeugsitz dieser Art bekannt, bei dessen Sitzkissen die mindestens eine Aussparung in Vertikalrichtung nach oben teilweise einerseits von einem beispielsweise aus Kunststoff bestehenden Schieber und andererseits von einer Lasche aus Stoff begrenzt ist.

### Aufgabe

Der Erfindung liegt die Aufgabe zu Grunde, einen Fahrzeugsitz der eingangs genannten Art zu verbessern, insbesondere eine Montage des Schaumteils des Sitzteils in annähernd waagerechter Bewegungsrichtung zu ermöglichen und Spalte oder sonstige Öffnungen zwischen dem Schaumteil und dem Gurtschloss zu vermeiden.

### Lösung

Diese Aufgabe wird erfindungsgemäß durch einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Ein erfindungsgemäßer Fahrzeugsitz umfasst eine Rückenlehne und ein Sitzteil, welches ein Sitzkissen aufweist, wobei das Sitzkissen mindestens eine Aussparung zur Aufnahme mindestens eines Gurtschlosses aufweist. Dabei ist die mindestens eine Aussparung in Vertikalrichtung nach oben teilweise von einer Brücke begrenzt.

Dadurch, dass die mindestens eine Aussparung in Vertikalrichtung nach oben teilweise von einer Brücke begrenzt ist, ist eine in Fahrtrichtung hinter dem Gurtschloss verbleibende Öffnung der Aussparung nach oben abgedeckt und somit nicht sichtbar.

Erfindungsgemäß weist die Brücke ein Kernmaterial auf, welches mit einem Bezug überzogen ist. Dadurch kann ein Kernmaterial mit gewünschten Eigenschaften, insbesondere in Bezug auf die Reißfestigkeit gewählt werden, während der optische Eindruck der Brücke dem des Sitzkissens entspricht.

Weiterhin erfindungsgemäß ist das Kernmaterial der Brücke ein elastisches Material, vorzugsweise ein Gummiband. Dadurch kann die Brücke bei der Montage des Sitzkissens leicht angehoben werden um ein Durchgleiten des Gurtschlosses zu ermöglichen. Anschließend zieht sich das Kernmaterial dann wieder zusammen und die Brücke liegt annähernd flach in ihrer ursprünglichen Lage.

Vorzugsweise ist das Kernmaterial der Brücke dabei in Querrichtung rechts und links der Aussparung an das Material des Sitzkissens angenäht.

Dabei besteht der Bezug der Brücke vorzugsweise zumindest vorwiegend aus Leder. Alternativ kann der Bezug auch aus Stoff oder einem anderen Material bestehen.

In einfacher Ausführung ist dabei eine erste Aussparung vorgesehen, deren Ausdehnung in Querrichtung der Breite des ersten Gurtschlosses entspricht.

Insbesondere bei einem Fahrzeugsitz mit drei Sitzplätzen ist vorteilhaft eine zweite Aussparung vorgesehen, deren Ausdehnung in Querrichtung der Summe der Breiten des zweiten Gurtschlosses und des dritten Gurtschlosses entspricht.

Zur Abdeckung eines hinter dem Gurtschloss verbleibenden Spalts ist die Brücke vorteilhaft derart angeordnet, dass ein in Fahrtrichtung vorderes Ende der Brücke an einem in Fahrtrichtung hinteren Ende des mindestens einen Gurtschlosses anliegt.

Vorzugsweise schließt eine in Vertikalrichtung oben liegende Fläche der Brücke zumindest annähernd bündig mit der in Vertikalrichtung oben liegende Fläche des Sitzkissens ab. Dadurch entsteht vorteilhaft der Eindruck einer gleichmäßigen Sitzfläche.

Vorteilhaft ist in Vertikalrichtung unterhalb der Brücke ein Durchlass vorgesehen, durch welchen das mindestens eine Gurtschloss bei der Montage durchführbar ist. Dadurch ist die Montage des Sitzkissens an dem Fahrzeugsitz vorteilhaft vereinfacht durchführbar.

Das Sitzkissen ist dabei vorzugsweise als Schaumteil ausgebildet.

Vorzugsweise erstreckt sich das Sitzkissen in Querrichtung über die komplette Breite des Fahrzeugsitzes.

Vorteilhaft ist die Aussparung im Querschnitt senkrecht zur Vertikalrichtung annähernd rechteckförmig gestaltet.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:

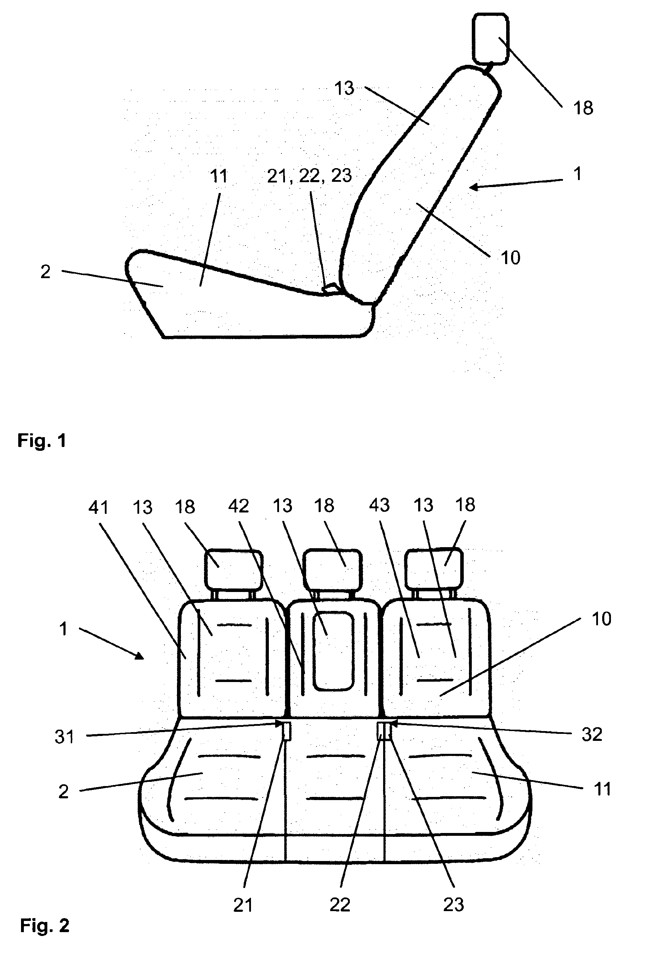

- Fig. 1:: eine schematische Darstellung eines Fahrzeugsitzes in Seitenansicht,
- Fig. 2:: eine schematische Darstellung des Fahrzeugsitzes aus Fig. 1 entgegen der Fahrtrichtung gesehen,

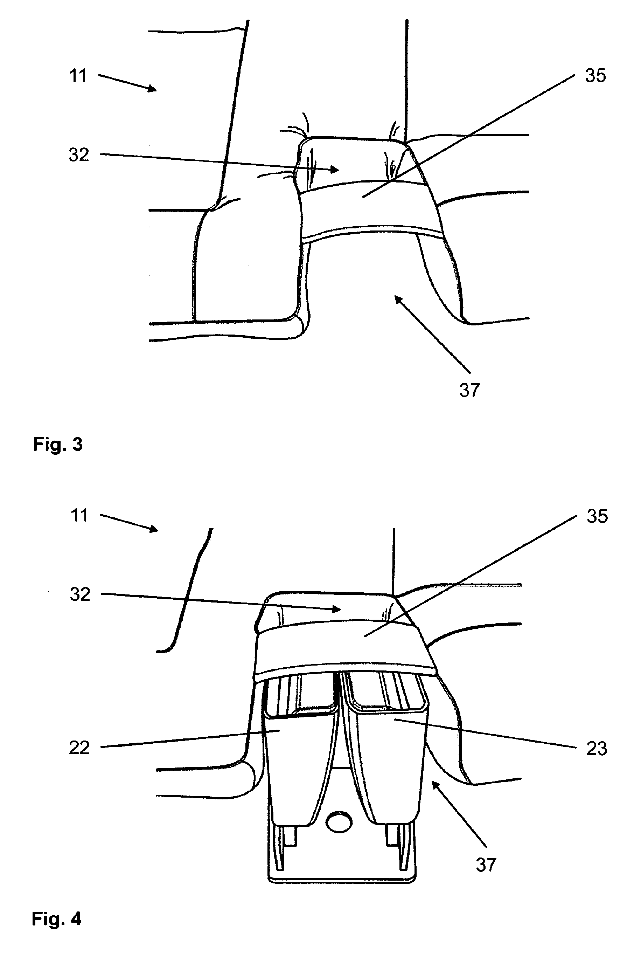

- Fig. 3:: ein Teil eines Sitzkissens in Fahrtrichtung gesehen,
- Fig. 4:: der Teil des Sitzkissens aus Fig. 3 während der Montage in Fahrtrichtung gesehen,

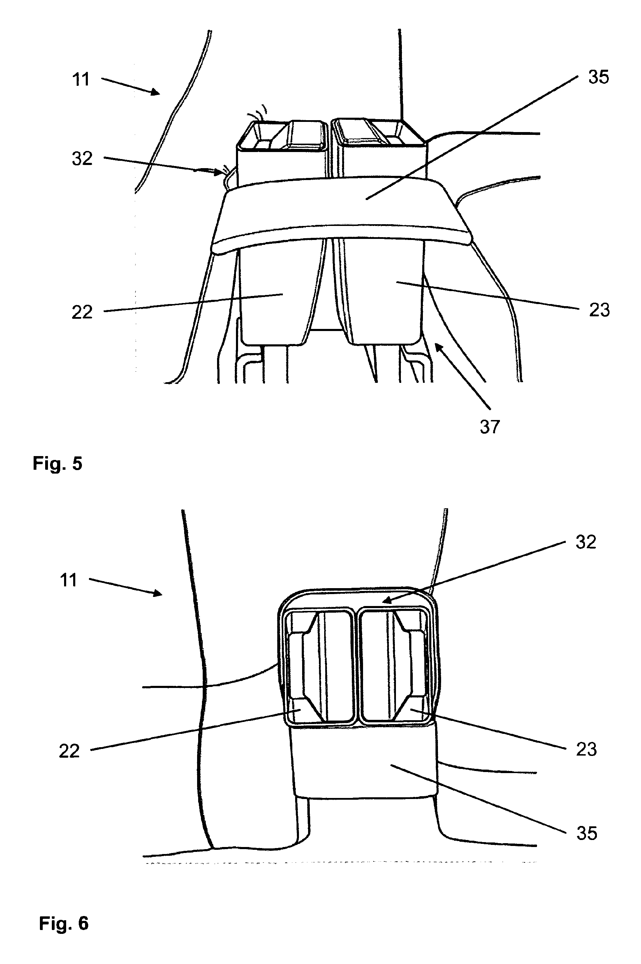

- Fig. 5:: der Teil des Sitzkissens aus Fig. 3 nach der Montage in Fahrtrichtung gesehen und
- Fig. 6:: der Teil des Sitzkissens aus Fig. 3 nach der Montage von oben gesehen.

Ein Fahrzeugsitz 1 für ein Kraftfahrzeug weist ein Sitzteil 2 und eine Rückenlehne 10 auf. Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Bei dem Fahrzeugsitz 1 handelt es sich vorliegend um einen Fondsitz, welcher sich in Querrichtung annähernd über die volle Breite des Innenraums des Kraftfahrzeugs erstreckt und welcher drei in Querrichtung nebeneinander angeordnete Sitzplätze, nämlich einen in Fahrtrichtung rechten Sitzplatz 41, einen mittleren Sitzplatz 42 und einen in Fahrtrichtung linken Sitzplatz 43 aufweist.

Das Sitzteil 2 umfasst ein als Schaumteil ausgebildetes Sitzkissen 11, welches sich in Querrichtung über die komplette Breite des Fahrzeugsitzes 1 erstreckt. Das Sitzkissen 11 ist somit jedem der drei Sitzplätze 41, 42, 43 zugeordnet. Das Sitzkissen 11 erstreckt sich entgegen der Fahrtrichtung bis unter die Rückenlehne 10.

Die Rückenlehne 10 weist drei in Querrichtung nebeneinander angeordnete Teilbereiche auf, wobei jedem Sitzplatz 41, 42, 43 einer der besagten Teilbereiche zugeordnet ist. Jeder Teilbereich der Rückenlehne 10 befindet sich in Vertikalrichtung oberhalb des Sitzkissens 11. Jeder Teilbereich der Rückenlehne 10 umfasst ein als Schaumteil ausgebildetes Rückenlehnenpolster 13.

An jedem in Vertikalrichtung oberen Ende der Teilbereiche der Rückenlehne 10, welche dem Sitzteil 2 abgewandt sind, ist ferner eine höheneinstellbare und neigungseinstellbare Kopfstütze 18 angebracht. Auch die Kopfstützen 18 umfassen je ein Schaumteil.

Das Sitzkissen 11, die Rückenlehnenpolster 13 und die Schaumteile der Kopfstützen 18 sind mit einem Bezug, vorliegend aus Leder, überzogen. Das Sitzkissen 11, die Rückenlehnenpolster 13 und die Schaumteile der Kopfstützen 18 erhöhen maßgeblich den Sitzkomfort für einen Insassen eines der Sitzplätze 41, 42, 43 des Fahrzeugsitzes 1.

Jeder Sitzplatz 41, 42, 43 des Fahrzeugsitzes 1 umfasst ferner einen nicht dargestellten Sicherheitsgurt, welcher als Dreipunktgurt ausgeführt ist. Ein Ende jedes Sicherheitsgurts ist in einem nicht dargestellten Gurtaufrollautomaten aufgenommen, der den Sicherheitsgurt bei Nichtbenutzung aufrollt. Der dem mittleren Sitzplatz 42 zugeordnete Gurtaufrollautomat befindet sich in dem mittleren Teilbereich der Rückenlehne 10 in der Nähe des dem Sitzteil 2 abgewandten Endes, nahe der Kopfstütze 18 des mittleren Sitzplatzes 42. Die den beiden äußeren Sitzplätzen 41, 43 zugeordneten Gurtaufrollautomaten befinden sich an der Fahrzeugstruktur, seitlich neben den Kopfstützen 18 der beiden äußeren Sitzplätze 41, 43.

Das andere Ende jedes Sicherheitsgurtes, an welchem je ein nicht dargestellter Gurtendbeschlag angeordnet ist, ist jeweils an der Struktur des Fahrzeugsitzes, vorliegend an dem Sitzteil 2, befestigt, vorliegend dort angeschraubt. Dabei befindet sich jeder Gurtendbeschlag in Vertikalrichtung annähernd senkrecht unter dem zugeordneten Gurtaufrollautomat.

Entlang jedes Sicherheitsgurtes ist eine ebenfalls nicht dargestellte Gurtzunge beweglich angeordnet. Jede Gurtzunge umfasst dabei eine Öffnung, welche von dem Sicherheitsgurt durchgriffen wird.

Der Fahrzeugsitz 1 umfasst ferner drei Gurtschlösser 21, 22, 23, in welche die Gurtzungen der Sicherheitsgurte einsteckbar sind. Dabei ist dem in Fahrtrichtung rechten Sitzplatz 41 das erste Gurtschloss 21, dem mittleren Sitzplatz 42 das zweite Gurtschloss 22 und dem in Fahrtrichtung linken Sitzplatz 43 das dritte Gurtschloss 23 zugeordnet. Das zweite Gurtschloss 22 und das dritte Gurtschloss 23 sind in Querrichtung unmittelbar nebeneinander angeordnet.

Schließt ein Insasse eines Sitzplatzes 41, 42, 43 des Fahrzeugsitzes 1 den zugehörigen Sicherheitsgurt durch Einstecken der entsprechenden Gurtzunge in das zugehörige Gurtschloss 21, 22, 23, so verläuft der Sicherheitsgurt von dem an der Struktur des Fahrzeugsitzes befestigten Gurtendbeschlag annähernd in Querrichtung zu der Gurtzunge im Gurtschloss 21, 22, 23, und von dort schräg in Vertikalrichtung nach oben zu dem dort angeordneten Gurtaufrollautomat.

Das Sitzkissen 11 weist in einem in Fahrtrichtung hinteren Bereich zwei Aussparungen 31, 32 zur Aufnahme der Gurtschlösser 21, 22, 23 auf. Die erste Aussparung 31 befindet sich in Querrichtung zwischen dem in Fahrtrichtung rechten Sitzplatz 41 und dem mittleren Sitzplatz 42 und nimmt dabei das erste Gurtschloss 21 auf. Die zweite Aussparung 32 befindet sich in Querrichtung zwischen dem in Fahrtrichtung linken Sitzplatz 43 und dem mittleren Sitzplatz 42 und nimmt das zweite Gurtschloss 22 sowie das dritte Gurtschloss 23 auf.

Die erste Aussparung 31 und die zweite Aussparung 32 sind ähnlich ausgestaltet, deshalb wird im Folgenden nur auf die zweite Aussparung 32 eingegangen. Die erste Aussparung 31 unterscheidet sich von der zweiten Aussparung 32 im Wesentlichen nur in der Ausdehnung in Querrichtung. Die Ausdehnung der ersten Aussparung 31 in Querrichtung entspricht der Breite des ersten Gurtschlosses 21 und beträgt vorliegend etwa 4 cm. Die Ausdehnung der zweiten Aussparung 32 in Querrichtung entspricht der Summe der Breiten des zweiten Gurtschlosses 22 und des dritten Gurtschlosses 23 und beträgt vorliegend etwa 8 cm.

Die zweite Aussparung 32 erstreckt sich in Vertikalrichtung vollständig durch das Sitzkissen 11 hindurch und ist im Querschnitt senkrecht zur Vertikalrichtung, also in einer durch die Fahrtrichtung und die Querrichtung definierten Ebene, annähernd rechteckförmig gestaltet. In Querrichtung ist die zweite Aussparung 32 rechts und links jeweils von dem Material des Sitzkissens 11 umgeben und begrenzt.

Die zweite Aussparung 32 beginnt an dem in Fahrtrichtung hinteren Ende des Sitzkissens 11 und erstreckt sich in Fahrtrichtung in das Sitzkissen 11 hinein, vorliegend etwa 20 cm weit. In Fahrtrichtung ist die zweite Aussparung 32 somit ebenfalls von dem Material des Sitzkissens 11 begrenzt. Entgegen der Fahrtrichtung ist die zweite Aussparung 32 also nicht begrenzt sondern offen.

Eine Brücke 35 erstreckt sich in Querrichtung über die zweite Aussparung 32 und überspannt diese. Im Querschnitt senkrecht zur Vertikalrichtung, also in einer durch die Fahrtrichtung und die Querrichtung definierten Ebene, ist die Brücke 35 annähernd rechteckförmig gestaltet. Die Ausdehnung der Brücke 35 in Querrichtung entspricht somit der Ausdehnung der zweiten Aussparung 32 in Querrichtung. Die Brücke 35 ist dabei in Querrichtung rechts und links mit dem Material des Sitzkissens 11 verbunden.

In Fahrtrichtung ist die Brücke 35 derart angeordnet, dass das in Fahrtrichtung vordere Ende der Brücke 35 an den in Fahrtrichtung hinteren Enden der Gurtschlösser 22, 23 anliegt. Die Brücke 35 erstreckt sich, ausgehend von ihrem vorderen Ende, entgegen der Fahrtrichtung nach hinten, wobei das in Fahrtrichtung hintere Ende der Brücke 35 vorliegend mindestens eines der Rückenlehnenpolster 13 der Rückenlehne 10 berührt. Alternativ kann die Brücke 35 sich entgegen der Fahrtrichtung auch bis zum hinteren Ende des Sitzkissens 11 erstrecken.

In Vertikalrichtung hat die Brücke 35 im Vergleich zu dem Sitzkissen 11 eine verhältnismäßig kleine Ausdehnung, vorliegend etwa 1 cm. Die in Vertikalrichtung oben liegende Fläche der Brücke 35 schließt annähernd bündig mit der in Vertikalrichtung oben liegende Fläche des Sitzkissens 11 ab. In Vertikalrichtung unterhalb der Brücke 35 ist somit ein Durchlass 37 vorgesehen, durch welchen die Gurtschlösser 22, 23 bei der Montage durchführbar sind.

Die Brücke 35 umfasst als Kernmaterial ein Gummiband. Das Kernmaterial der Brücke 35 kann alternativ auch ein anderes elastisches Material sein. Auch eine Kombination oder ein Verbund mehrerer verschiedener Materialien ist denkbar.

Das Kernmaterial der Brücke 35, in diesem Ausführungsbeispiel das Gummiband, ist in Querrichtung rechts und links der Aussparung 32 an das Material des Sitzkissens 11 angenäht. Vorliegend ist das als Gummiband ausgeführte Kernmaterial der Brücke 35 mit einem Bezug aus Leder überzogen. Der optische Eindruck der Brücke 35 entspricht somit dem des Sitzkissens 11. Selbstverständlich ist auch ein Bezug aus einem anderen Material denkbar.

Eine weitere, nicht im Detail dargestellte Brücke überspannt die erste Aussparung 31 auf die gleiche Art. Diese Brücke unterscheidet sich von der die zweite Aussparung 32 überspannenden Brücke 35 lediglich in ihrer Ausdehnung in Querrichtung.

Bei der Montage des Fahrzeugsitzes 1 in dem Kraftfahrzeug werden zunächst die Rückenlehnenpolster 13 an der Struktur der Rückenlehne 10 befestigt und die Gurtschlösser 21, 22, 23 werden an der Struktur des Fahrzeugsitzes 1, vorliegend an der Struktur des Sitzteils 2 befestigt. Anschließend wird das Sitzkissen 11 montiert.

Dazu wird das Sitzkissen 11 zunächst auf der Struktur des Sitzteils 2 positioniert und dann entgegen der Fahrtrichtung nach hinten geschoben. In Querrichtung wird das Sitzkissen 11 derart positioniert, dass das erste Gurtschloss 21 in Fahrtrichtung mit der ersten Aussparung 31 fluchtet und das zweite Gurtschloss 22 sowie das dritte Gurtschloss 23 in Fahrtrichtung mit der zweiten Aussparung 32 fluchten.

Bei der Verschiebung des Sitzkissens 11 entgegen der Fahrtrichtung nach hinten wird dabei das erste Gurtschloss 21 von der ersten Aussparung 31 aufgenommen und das zweite Gurtschloss 22 sowie das dritte Gurtschloss 23 werden von der zweiten Aussparung 32 aufgenommen.

Die Brücke 35, welche die zweite Aussparung 32 in Vertikalrichtung nach oben teilweise begrenzt, wird leicht angehoben und die beiden Gurtschlösser 22, 23 gelangen unter der Brücke 35 hindurch zu dem in Vertikalrichtung nach oben freien Bereich der zweiten Aussparung 32. Ebenso wird die Brücke, welche die erste Aussparung 31 in Vertikalrichtung nach oben teilweise begrenzt, leicht angehoben und das erste Gurtschloss 21 gelangt unter der Brücke 35 hindurch zu dem in Vertikalrichtung nach oben freien Bereich der ersten Aussparung 31.

Das Sitzkissen 11 wird dann entgegen der Fahrtrichtung weiter geschoben bis ein in Fahrtrichtung hinterer Bereich des Sitzkissens 11 sich unterhalb der Rückenlehnenpolster 13 der Rückenlehne 10 befindet. Die Brücke, welche der ersten Aussparung 31 zugeordnet ist, und die Brücke 35, welche der zweiten Aussparung 32 zugeordnet ist, befinden sich dann in Fahrtrichtung hinter den Gurtschlössem 21, 22, 23 und verdecken dort die Aussparungen 31, 32 in Vertikalrichtung nach oben.

### Bezugszeichenliste

- 1: Fahrzeugsitz
- 2: Sitzteil
- 10: Rückenlehne
- 11: Sitzkissen
- 13: Rückenlehnenpolster
- 18: Kopfstütze
- 21: erstes Gurtschloss
- 22: zweites Gurtschloss
- 23: drittes Gurtschloss
- 31: erste Aussparung
- 32: zweite Aussparung
- 35: Brücke
- 37: Durchlass
- 41: rechter Sitzplatz
- 42: mittlerer Sitzplatz
- 43: linker Sitzplatz

## Patentansprüche

1. Fahrzeugsitz (1), umfassend eine Rückenlehne (10) und ein Sitzteil (2), welches ein Sitzkissen (11) aufweist, wobei das Sitzkissen (11) mindestens eine Aussparung (31, 32) zur Aufnahme mindestens eines Gurtschlosses (21, 22, 23) aufweist, **dadurch gekennzeichnet, dass** die mindestens eine Aussparung (31, 32) in Vertikalrichtung nach oben teilweise von einer Brücke (35) begrenzt ist, wobei die Brücke (35) ein Kernmaterial aufweist, welches mit einem Bezug überzogen ist wobei das Kernmaterial der Brücke (35) ein elastisches Material ist.

2. Fahrzeugsitz (1) nach Anspruch 1, **dadurch gekennzeichnet, dass** das Kernmaterial der Brücke (35) in Querrichtung rechts und links der Aussparung (31, 32) an das Material des Sitzkissens (11) angenäht ist.

3. Fahrzeugsitz (1) nach einem der Ansprüche 1 oder 2, **dadurch gekennzeichnet, dass** der Bezug der Brücke (35) zumindest vorwiegend aus Leder besteht.

4. Fahrzeugsitz (1) nach einem der vorstehenden Ansprüche, **dadurch gekennzeichnet, dass** eine erste Aussparung (31) vorgesehen ist, deren Ausdehnung in Querrichtung der Breite des ersten Gurtschlosses (21) entspricht.

5. Fahrzeugsitz (1) nach einem der vorstehenden Ansprüche, **dadurch gekennzeichnet, dass** eine zweite Aussparung (32) vorgesehen ist, deren Ausdehnung in Querrichtung der Summe der Breiten des zweiten Gurtschlosses (22) und des dritten Gurtschlosses (23) entspricht.

6. Fahrzeugsitz (1) nach einem der vorstehenden Ansprüche, **dadurch gekennzeichnet, dass** ein in Fahrtrichtung vorderes Ende der Brücke (35) an einem in Fahrtrichtung hinteren Ende des mindestens einen Gurtschlosses (21, 22, 23) anliegt.

7. Fahrzeugsitz (1) nach einem der vorstehenden Ansprüche, **dadurch gekennzeichnet, dass** eine in Vertikalrichtung oben liegende Fläche der Brücke (35) zumindest annähernd bündig mit der in Vertikalrichtung oben liegende Fläche des Sitzkissens (11) abschließt.

8. Fahrzeugsitz (1) nach einem der vorstehenden Ansprüche, **dadurch gekennzeichnet, dass** in Vertikalrichtung unterhalb der Brücke (35) ein Durchlass (37) vorgesehen ist, durch welchen das mindestens eine Gurtschloss (21, 22, 23) bei der Montage durchführbar ist.

9. Fahrzeugsitz (1) nach Anspruch 1, **dadurch gekennzeichnet, dass** das Kernmaterial der Brücke (35) ein Gummiband ist.

10. Fahrzeugsitz (1) nach einem der vorstehenden Ansprüche, **dadurch gekennzeichnet, dass** das Sitzkissen (11) als Schaumteil ausgebildet ist.

11. Fahrzeugsitz (1) nach einem der vorstehenden Ansprüche, **dadurch gekennzeichnet, dass** das Sitzkissen (11) sich in Querrichtung über die komplette Breite des Fahrzeugsitzes (1) erstreckt.

12. Fahrzeugsitz (1) nach einem der vorstehenden Ansprüche, **dadurch gekennzeichnet, dass** die Aussparung (31, 32) im Querschnitt senkrecht zur Vertikalrichtung annähernd rechteckförmig gestaltet ist.

## Claims

1. Vehicle seat (1) comprising a backrest (10) and a seat part (2) which has a seat cushion (11), wherein the seat cushion (11) has at least one recess (31, 32) for receiving at least one belt buckle (21, 22, 23), **characterized in that** the at least one recess (31, 32) is partially bounded upward in the vertical direction by a bridge (35), wherein the bridge (35) has a core material which is covered by a cover, wherein the core material of the bridge (35) is an elastic material.

2. Vehicle seat (1) according to Claim 1, **characterized in that** the core material of the bridge (35) is sewn onto the material of the seat cushion (11) on the right and left of the recess (31, 32) in the transverse direction.

3. Vehicle seat (1) according to either of Claims 1 and 2, **characterized in that** the cover of the bridge (35) is at least predominantly composed of leather.

4. Vehicle seat (1) according to one of the preceding claims, **characterized in that** a first recess (31), the extent of which in the transverse direction corresponds to the width of the first belt buckle (21), is provided.

5. Vehicle seat (1) according to one of the preceding claims, **characterized in that** a second recess (32), the extent of which in the transverse direction corresponds to the sum of the width of the second belt buckle (22) and of the third belt buckle (23), is provided.

6. Vehicle seat (1) according to one of the preceding claims, **characterized in that** a front end, in the direction of travel, of the bridge (35) bears against a rear end, in the direction of travel, of the at least one belt buckle (21, 22, 23).

7. Vehicle seat (1) according to one of the preceding claims, **characterized in that** a surface of the bridge (35) which lies at the top in the vertical direction ends at least approximately flush with that surface of the seat cushion (11) which lies at the top in the vertical direction.

8. Vehicle seat (1) according to one of the preceding claims, **characterized in that** a passage (37) through which the at least one belt buckle (21, 22, 23) can be passed during the installation is provided in the vertical direction below the bridge (35).

9. Vehicle seat (1) according to Claim 1, **characterized in that** the core material of the bridge (35) is a rubber band.

10. Vehicle seat (1) according to one of the preceding claims, **characterized in that** the seat cushion (11) is designed as a foam part.

11. Vehicle seat (1) according to one of the preceding claims, **characterized in that** the seat cushion (11) extends in the transverse direction over the entire width of the vehicle seat (1).

12. Vehicle seat (1) according to one of the preceding claims, **characterized in that** the recess (31, 32) is of approximately rectangular design in cross section perpendicularly to the vertical direction.

## Revendications

1. Siège de véhicule (1) comprenant un dossier (10) et une partie de siège (2) qui présente un coussin de siège (11), le coussin de siège (11) présentant au moins un évidement (31, 32) pour recevoir au moins une boucle de ceinture (21, 22, 23), **caractérisé en ce que** l'au moins un évidement (31, 32) est limité vers le haut dans la direction verticale par un pont (35), le pont (35) présentant un matériau de coeur qui est couvert par un revêtement, le matériau de coeur du pont (35) étant un matériau élastique.

2. Siège de véhicule (1) selon la revendication 1, **caractérisé en ce que** le matériau de coeur du pont (35) est cousu sur le matériau du coussin de siège (11) à gauche et à droite de l'évidement (31, 32) dans la direction transversale.

3. Siège de véhicule (1) selon l'une quelconque des revendications 1 ou 2, **caractérisé en ce que** le revêtement du pont (35) est au moins principalement constitué de cuir.

4. Siège de véhicule (1) selon l'une quelconque des revendications précédentes, **caractérisé en ce qu'**il est prévu un premier évidement (31), dont l'étendue dans la direction transversale correspond à la largeur de la première boucle de ceinture (21).

5. Siège de véhicule (1) selon l'une quelconque des revendications précédentes, **caractérisé en ce qu'**il est prévu un deuxième évidement (32) dont l'étendue dans la direction transversale correspond à la somme des largeurs de la deuxième boucle de ceinture (22) et de la troisième boucle de ceinture (23).

6. Siège de véhicule (1) selon l'une quelconque des revendications précédentes, **caractérisé en ce qu'**une extrémité avant, dans la direction de déplacement, du pont (35) s'applique contre une extrémité arrière, dans la direction de déplacement, de l'au moins une boucle de ceinture (21, 22, 23).

7. Siège de véhicule (1) selon l'une quelconque des revendications précédentes, **caractérisé en ce qu'**une surface du pont (35) qui est située sur le dessus dans la direction verticale se termine au moins approximativement en affleurement avec la surface du coussin de siège (11) qui est située sur le dessus dans la direction verticale.

8. Siège de véhicule (1) selon l'une quelconque des revendications précédentes, **caractérisé en ce qu'**un passage (37) à travers lequel l'au moins une boucle de ceinture (21, 22, 23) peut être passée au cours de l'installation est prévu dans la direction verticale sous le pont (35).

9. Siège de véhicule (1) selon la revendication 1, **caractérisé en ce que** le matériau de coeur du pont (35) est une bande en caoutchouc.

10. Siège de véhicule (1) selon l'une quelconque des revendications précédentes, **caractérisé en ce que** le coussin de siège (11) est conçu sous forme de pièce en mousse.

11. Siège de véhicule (1) selon l'une quelconque des revendications précédentes, **caractérisé en ce que** le coussin de siège (11) s'étend dans la direction transversale sur toute la largeur du siège de véhicule (1).

12. Siège de véhicule (1) selon l'une quelconque des revendications précédentes, **caractérisé en ce que** l'évidement (31, 32) a une conception approximativement rectangulaire en section transversale perpendiculairement à la direction verticale.
